(19) Europäisches Patentamt European Patent Office Office européen des brevets

(11) **EP 4 749 330 A1**

(12) **DEMANDE DE BREVET EUROPEEN**

(43) Date de publication:
**27.05.2026 Bulletin 2026/22**

(21) Numéro de dépôt: **24214083.8**

(22) Date de dépôt: **20.11.2024**

(51) Classification Internationale des Brevets (IPC):
**G01T 1/167** (2006.01)

(52) Classification Coopérative des Brevets (CPC):
**G01T 1/167**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Trasis S.A.**
**4430 Ans (BE)**

(72) Inventeurs:
• **MARECHAL, Adrien**
**4606 SAINT-ANDRE (BE)**
• **MORELLE, Jean-Luc**
**4000 LIEGE (BE)**
• **DUMONT, Philippe**
**4020 JUPILLE SUR MEUSE (BE)**
• **BEKAERT, Philippe**
**4500 HUY (BE)**
• **STEVENS, Florian**
**4500 HUY (BE)**
• **VEITHEN, Andreas**
**4130 ESNEUX (BE)**
• **PIRARD, Benoit**
**4802 HEUSY (BE)**

(74) Mandataire: **AWA Benelux**
**Parc d'affaires Zénobe Gramme - Bât. K**
**Square des Conduites d'Eau 1-2**
**4020 Liège (BE)**

(54) **APPAREIL DE MESURE DE L'ACTIVITE D'UNE SOLUTION RADIOACTIVE DANS UNE SERINGUE ET PROCEDE DE CONTROLE DUDIT APPAREIL**

(57) La présente demande se rapporte à un appareil (1) pour mesurer l'activité d'un échantillon de solution radioactive, dans un volume donné V, comprenant :
- un conteneur portable blindé avec un porte-échantillon (10) ;
- un récipient (2) ayant un axe longitudinal de symétrie et contenant la solution radioactive ;
- au moins deux détecteurs de rayonnement (3, 4, ...), les détecteurs (3, 4, ...) étant disposés latéralement par rapport à l'axe longitudinal du récipient (2) ;
- un dispositif de conversion (11) du rayonnement reçu par chaque détecteur (3, 4, ...) en un signal électrique M1, M2, ... correspondant ;
- des moyens de traitement du signal électrique (12) et des moyens d'affichage (13) ;
caractérisé en ce que les moyens de traitement du signal (12) sont configurés pour mettre au jour une corrélation donnée entre les signaux électriques respectifs M1, M2, ... représentatifs de ladite activité de l'échantillon et le volume V de l'échantillon, ce qui rend l'obtention de ladite activité indépendante du volume de l'échantillon.

FIG. 2

EP 4 749 330 A1

## Description

### Objet de l'invention

La présente invention se rapporte au domaine technique des appareils de mesure de l'activité d'un échantillon radioactif en solution.

L'appareil de mesure de radioactivité généralement concerné par l'invention peut être désigné par le terme activimètre ou calibrateur de radionucléides, sans que cela soit limité aux définitions procurées par les réglementations. Selon les définitions légales en vigueur, l'invention concernera par exemple les systèmes de mesure utilisés pour la mesure de l'activité des radioéléments d'usage en médecine nucléaire ou encore pour mesurer l'activité des doses de radionucléides émettant des photons avant leur administration à un patient ou sujet de recherche humain ou encore pour mesurer, par mesure directe ou par une combinaison de mesures et de calculs, l'activité de chaque dose d'un radionucléide émetteur alpha ou bêta avant utilisation médicale. Dans la suite de l'exposé, le terme « activimètre » sera souvent utilisé pour désigner de manière générique un appareil de mesure de la radioactivité.

L'invention se rapporte également au procédé de mise en oeuvre et de contrôle de l'appareil.

### Etat de la technique

On connaît des activimètres destinés à mesurer l'activité d'une solution radioactive.

Les chambres d'ionisation à puits sous pression sont un premier type d'activimètre largement utilisé. Elles sont composées d'un cylindre à l'intérieur duquel se trouve un gaz dont les atomes sont ionisés par le rayonnement ionisant provenant de l'échantillon radioactif et d'électrodes polarisées sous haute tension et servant à la collecte des charges électriques ainsi créées. L'ensemble est connecté à un dispositif électronique de mesure de courant. Le courant électrique mesuré est proportionnel à l'activité de la source radioactive.

Un autre type d'activimètre se compose d'un (ou plusieurs) radiodétecteur(s) constitué(s) d'un scintillateur couplé à un dispositif de mesure de la lumière émise, , par exemple, un photomultiplicateur ou une photodiode à jonction « PIN », qui convertit un signal lumineux en un courant électrique. Ce courant est lui-même amplifié au sein même du radiodétecteur pour générer une tension proportionnelle au rayonnement ionisant reçu par le scintillateur. Il s'agit ici d'une mesure continue et non d'un système de comptage d'impulsion.

Dans un mode d'exécution particulier, l'activimètre vise à mesurer l'activité d'une solution radioactive homogène dans une seringue d'un modèle donné (ou tout autre récipient), ladite seringue étant localisée avec précision dans un logement. La seringue sert au dosage précis et à l'administration de doses de substance radiopharmaceutique au patient.

Le document US7608831B2 divulgue un système comprenant un premier détecteur de rayonnement, un deuxième détecteur de rayonnement, un porte-échantillon pour seringue transportable et blindé de matière radioactive, un circuit de traitement du signal et un affichage vidéo.

Le premier détecteur de rayonnement et le second détecteur de rayonnement sont placés à une distance prédéterminée et alignés sur un axe commun A-A', qui est aussi l'axe de la seringue ou du récipient renfermant l'échantillon radioactif. Chaque détecteur produit un courant électrique qui est proportionnel à la vitesse d'absorption de l'énergie par les détecteurs, émanant d'un flacon ou d'une seringue rempli(e) de radioactivité. Les détecteurs sont des détecteurs à scintillation utilisant des matériaux solides tels que des cristaux ou des plastiques. Le cristal ou le plastique à scintillation est couplé à un transducteur photoélectrique tel qu'un tube photomultiplicateur ou, dans un mode de réalisation préféré, une photodiode au silicium (SiPM) qui convertit l'énergie lumineuse produite dans le scintillateur en courant électrique qui, à son tour, peut être amplifié et converti en un signal de tension mesuré plus facilement. On trouve également des détecteurs dans lesquels les photons gamma énergétiques interagissent directement (sans nécessiter un scintillateur) dans un matériau semi-conducteur à l'état solide tel que le silicium, le tellurure de cadmium, etc. pour produire un courant électrique.

Les signaux de tension des sorties d'amplificateur respectives sont appliqués à des entrées séparées d'un appareil d'acquisition de données électroniques à 2 canaux. Un circuit de sommation analogique ou un appareil de calcul numérique génère la somme des deux tensions (ou de manière équivalente, la moyenne des deux tensions). Cette somme (ou moyenne) des signaux est directement proportionnelle à la quantité de radioactivité contenue dans la seringue. De plus, la différence entre les deux tensions (ou de manière équivalente, la différence divisée par la somme) dérivée du circuit de différence peut indiquer un degré relatif de précision de placement de l'échantillon radioactif entre les deux détecteurs, de sorte que les deux signaux des détecteurs sont égaux. Une lecture de différence "zéro" dénote un équilibre parfait du signal.

Par rapport à une chambre d'ionisation remplie d'air ou de gaz, l'efficacité de détection élevée d'un détecteur solide fournit des mesures plus rapides et plus précises, tout en permettant en même temps un appareil beaucoup plus compact, et dont la protection est plus facile à mettre en oeuvre.

Les détecteurs ne nécessitent qu'un blindage suffisant pour éviter les fausses lectures dues au rayonnement ambiant ou diffusé des objets proches et de l'environnement du laboratoire. Un blindage « lourd » pour la protection des personnes peut ainsi être concentré principalement autour du flacon ou de la seringue radioactive à mesurer.

Le document US11029418B2 divulgue un calibrateur pour déterminer la quantité de radioactivité dans un échantillon radioactif, ainsi qu'un procédé de fonctionnement du calibrateur. Le calibrateur comporte un réceptacle contenant une chambre d'échantillon à l'intérieur de laquelle l'échantillon de microdose radioactive peut être conservé. Un réseau d'au moins trois détecteurs de scintillation est disposé autour de la chambre d'échantillon. Un réseau de transducteurs de lumière est optiquement couplé à des détecteurs à scintillation respectifs, et des compteurs électroniques sont prévus pour les détecteurs de scintillation. Les transducteurs de lumière sont couplés électriquement à des compteurs électroniques respectifs pour compter les événements de désintégration radioactive de la microdose radioactive correspondant aux particules détectées par leurs détecteurs à scintillation respectifs.

Dans certains modes de réalisation, les détecteurs à scintillation sont disposés de manière annulaire autour de la chambre d'échantillon. Les détecteurs à scintillation en nombre compris entre 3 et 20 par exemple peuvent être de forme mutuellement complémentaire et disposés de manière contiguë dans un anneau. Les formes des détecteurs à scintillation peuvent se conformer aux détecteurs adjacents.

Dans d'autres modes de réalisation, les transducteurs de lumière sont des tubes photomultiplicateurs (PMT) ou des photomultiplicateurs au silicium (SiPM).

Le document FR3053124B1 divulgue un activimètre comportant une tête de détection et une unité de mesure, la tête de détection étant propre à fournir un signal d'activité représentatif de l'activité nucléaire d'un échantillon, et l'unité de mesure étant configurée pour mesurer l'activité de l'échantillon à partir du signal d'activité fourni par la tête de détection.

La tête de détection comprend un porte-échantillon adapté pour recevoir l'échantillon et disposé dans le volume interne de l'organe sensible. La tête de détection comprend, en outre, au moins un détecteur relié à l'organe de couplage, l'organe de couplage étant configuré pour acheminer, vers au moins un détecteur, au moins une partie des photons collectés en provenance de la paroi, l'au moins un détecteur étant propre à générer, à partir des photons acheminés par l'organe de couplage, un signal électrique représentatif de l'activité de l'échantillon.

Le détecteur est un photodétecteur classiquement connu, par exemple un photomultiplicateur, ou encore une photodiode. Le détecteur est propre à détecter les photons dont la longueur d'onde appartient à la plage de longueur d'onde prédéterminée. En particulier, le détecteur est configuré pour générer un signal électrique formant le signal d'activité à partir des photons acheminés par l'organe de couplage et détectés par le détecteur.

En variante, la tête de détection comporte au moins deux détecteurs. Dans ce cas, les détecteurs sont identiques. Chaque détecteur est relié en sortie de l'organe de couplage. En outre, l'organe de couplage est adapté pour fournir un même signal optique à chacun des détecteurs à partir des photons collectés en provenance de l'organe sensible.

Avantageusement, la liaison comporte une pluralité de voies, chaque voie étant associée à un détecteur. Chaque voie est adaptée pour acheminer, vers l'unité de mesure, le signal électrique délivré par le détecteur correspondant. Le signal d'activité est formé par l'ensemble des signaux électriques fournis par les détecteurs.

### Buts de l'invention

La présente invention vise à fournir un activimètre configuré pour mesurer l'activité d'un volume donné de solution radioactive dans une seringue ou tout autre récipient de volume à symétrie axiale, mais de manière insensible au changement de volume de remplissage de la seringue selon l'axe de symétrie dudit volume et/ou de la localisation précise du volume sur l'axe de symétrie.

L'invention vise en outre à fournir un activimètre capable de mesurer l'activité dans une large gamme d'activité allant de 37kBq à 37GBq.

Un autre but de l'invention est de fournir un activimètre capable de détecter des bulles d'air dans le volume de solution radioactive au moins en fonctionnement normal, en solution homogène et avec des détecteurs fonctionnels.

Un autre but encore de l'invention est de s'affranchir des activimètres de type puits (chambre d'ionisation) qui peuvent conduire à des mesures imprécises notamment en cas de fuite du gaz sous pression, ces détecteurs ayant le défaut d'être encombrants et de nécessiter une masse de blindage plus importante.

### Principaux éléments caractéristiques de l'invention

Un premier aspect de la présente invention se rapporte à un appareil pour mesurer l'activité d'un échantillon de solution radioactive, dans un volume donné V, comprenant :

- un conteneur portable blindé avec un porte-échantillon ;

- un récipient ayant un axe longitudinal de symétrie et contenant la solution radioactive ;

- au moins deux détecteurs de rayonnement, les détecteurs étant disposés latéralement par rapport à l'axe longitudinal du récipient ;

- un dispositif de conversion du rayonnement reçu par chaque détecteur en un signal électrique M1, M2, ... correspondant ;

- des moyens de traitement du signal électrique et des moyens d'affichage ;

caractérisé en ce que les moyens de traitement du signal sont configurés pour mettre au jour une corrélation donnée entre les signaux électriques respectifs M1, M2, ... représentatifs de ladite activité de l'échantillon et le volume V de l'échantillon, ce qui rend l'obtention de ladite activité indépendante du volume de l'échantillon.

Selon des modes d'exécution préférés de l'invention, l'appareil comporte en outre au moins une des caractéristiques suivantes ou une combinaison appropriée de plusieurs d'entre elles :

- les détecteurs sont positionnés pour fournir une mesure d'activité qui soit une fonction F(M1, M2, ...) des signaux électriques respectifs M1, M2, ... obtenus à partir des détecteurs de rayonnement ;

- la fonction F(M1, M2, ...) est une simple addition des signaux électriques respectifs M1+M2+ ... ;

- le récipient est une seringue munie d'un poussoir à piston ;

- l'appareil comporte un actionneur de seringue capable de connaître à tout instant la position du poussoir de la seringue et donc le volume de solution V dans la seringue ;

- la sensibilité et la position des détecteurs sont choisies pour pouvoir mesurer une activité dans un intervalle compris entre 37kBq et 37GBq ;

- l'appareil comporte deux détecteurs disposés selon un axe parallèle à l'axe longitudinal du récipient mais distinct de celui-ci ;

- les moyens de traitement du signal électrique et les moyens d'affichage sont configurés pour convertir, respectivement afficher, la mesure électrique en $\mu$V résultant de F(M1, M2) en MBq ou Ci, par application d'un facteur isotopique.

Un deuxième aspect de la présente invention se rapporte à un procédé de mise en oeuvre et contrôle de l'appareil décrit ci-dessus, caractérisé par les étapes suivantes :

- on étalonne préalablement l'appareil au moyen de différents volumes d'une solution ne renfermant pas de bulle d'air et on associe un ratio, sélectionné parmi le groupe consistant en M2/M1, M2/(M1+M2) et M1/(M1+M2), à une fonction R(V), où V est le volume de la solution d'étalonnage ;
- en utilisation avec une solution d'activité inconnue de volume connu V, on mesure ledit ratio ;
- si le ratio mesuré s'écarte de plus d'un pourcentage prédéterminé, de préférence 10%, de la courbe de la fonction R(V), dépendant de la valeur du volume V, on affiche un message d'erreur indiquant une non-conformité associée à la présence de bulles d'air dans la solution.

Avantageusement, les mesures M1, M2 sont corrigées de la manière suivante :

- on sélectionne lors de la construction de l'appareil des détecteurs dont la variation de sensibilité intrinsèque ne s'écarte pas de plus de 1% d'un détecteur à l'autre ;
- on soustrait l'offset du signal de chaque détecteur, le dépassement d'un offset maximal prédéterminé entraînant l'affichage d'un message d'erreur ;
- on corrige la sensibilité des détecteurs par application d'une correction linéaire dépendante de la température, cette fonction étant commune à tous les détecteurs d'un même modèle.

Un troisième aspect de la présente invention se rapporte à une utilisation de l'appareil décrit ci-dessus, pour la détection de présence de bulles dans la solution radioactive, sur base du contrôle d'une corrélation entre les signaux électriques respectifs M1, M2, ... et le volume V de l'échantillon.

## Brève description des figures

La figure 1 représente une vue tri-dimensionnelle réaliste d'un activimètre selon la présente invention, avec ses deux radiodétecteurs et la seringue dans laquelle se trouve la solution dont l'activité est mesurée. Le détecteur D2 montre le détail du cristal scintillateur.

La figure 2 représente une vue schématique de l'activimètre selon l'invention montrant les deux radiodétecteurs et une seringue, ainsi que les paramètres importants permettant de déterminer l'activité du volume de solution radioactive.

La figure 3 représente l'interaction entre l'actionneur de seringue et son capteur de position (non représenté) qui permet de connaître précisément le volume prélevé dans la seringue et de vérifier la présence d'air dans le volume mesuré en comparant les différents ratios, à savoir tension D1 sur tension D2, tension D2 sur tension D1, tension D1 sur somme des tensions D1+D2, et tension D2 sur somme des tensions D1+D2.

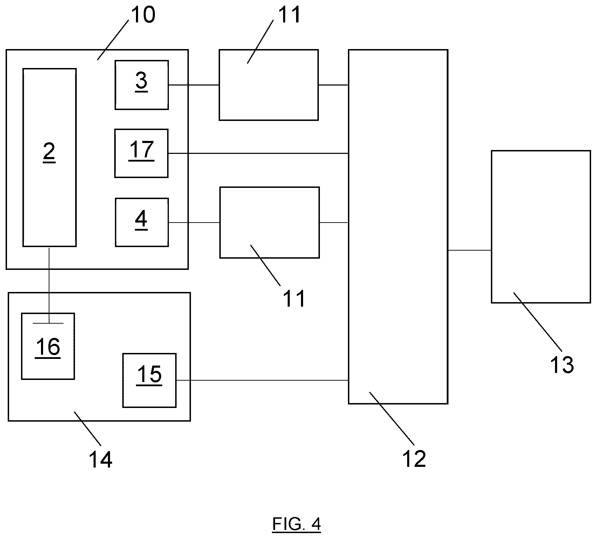

La figure 4 représente schématiquement la génération des signaux et l'analyse des signaux ainsi que l'affichage sur l'écran de la mesure d'activité et la présence d'air éventuelle.

La figure 5 montre les signaux en tension de chaque détecteur seul ainsi que la somme de ces signaux, en fonction du niveau de remplissage de la seringue.

La figure 6 montre l'évolution de la sensibilité des détecteurs en fonction du niveau de remplissage de la seringue.

La figure 7 permet de comparer deux types de prélèvements via les ratios M2/M1 et M1/M2 : avec de l'air après 2,5ml de prélèvement de-solution radioactive et sans air.

La figure 8A montre une forme d'exécution d'un tiroir pour la source de référence en vue du contrôle qualité périodique imposé par les règlementations, dans une position de « rangement » sécurisée par une clef.

La figure 8B montre la même forme d'exécution du tiroir de la source de référence en vue du contrôle qualité périodique imposé par les règlementations, dans une position de « mesure » de la source de référence.

La figure 8C montre la même forme d'exécution du tiroir de la source de référence pour le contrôle qualité périodique imposé par les règlementations, dans une position de « placement » de la source de référence dans le logement blindé du tiroir.

## Description d'une forme d'exécution préférée de l'invention

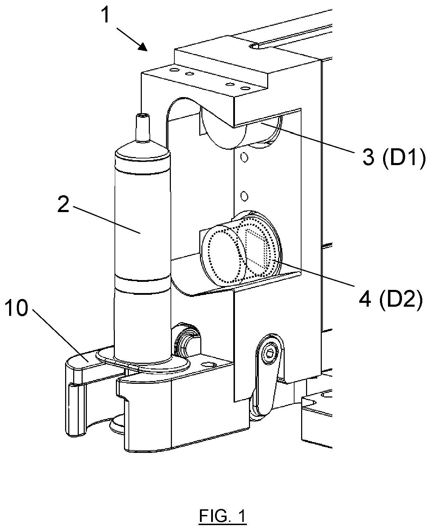

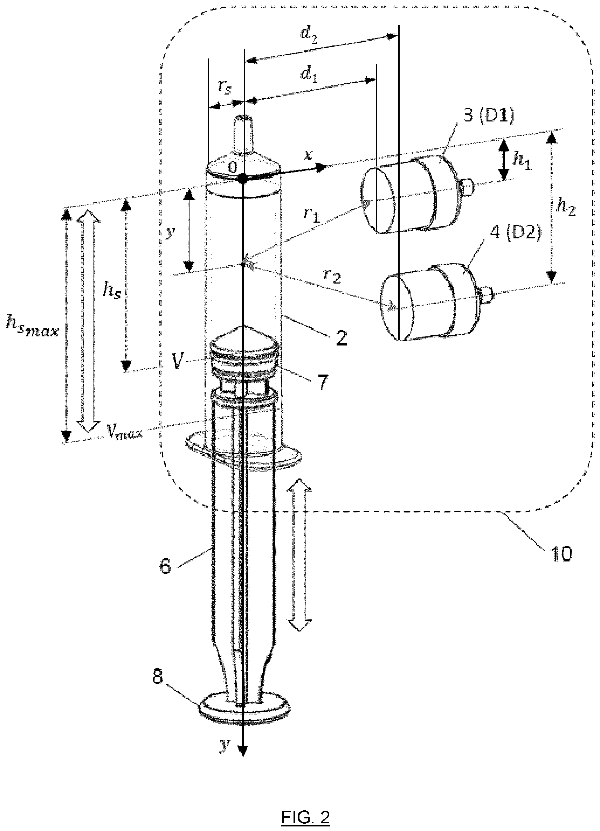

Comme représenté sur les figures 1 et 2, l'activimètre 1 selon la présente invention comporte un porte-seringue ou logement 10 de seringue pour le positionnement précis d'une seringue 2 et comprend une pluralité de détecteurs et de préférence deux détecteurs, un premier détecteur 3 (D1) et un second détecteur 4 (D2), de préférence identiques et positionnés/localisés avec précision par rapport au logement de seringue 10. Le seul facteur géométrique variable et restant à prendre en considération est le niveau de remplissage de la seringue avec la solution, autrement dit le volume effectif de solution.

En se référant à la figure 2, on a :

$$\rho = \frac{A_{tot}}{V} * (\pi r_s^2)$$

$$r_1 = \sqrt{d_1^2 + (y - h_1)^2}$$

$$0 < h_s < h_{s_{max}}$$

où $A_{tot}$ est l'activité totale dans la seringue (en [MBq] ou [mCi]) et ρ est l'activité linéique (dont l'unité est par ex. [MBq/mm]), le long d'axe de symétrie de la seringue allant de 0mm (= 0ml) à $h_{s_{max}}$ (distance parcourue par le piston correspondant à $V_{tot}$ qui le volume total admissible dans la seringue).

L'activité mesurée d'une source est inversement proportionnelle au carré de la distance à laquelle on la mesure :

$$A_{\mathrm{D}1}\big(h_1, d_1, V(h_s)\big)$$

$$= \rho . \int_0^{\mathrm{h}_s} \frac{1}{d_1^2 + (y - \mathrm{h}_1)^2} dy = \rho \frac{1}{d_1} \left[ \arctan\left(\frac{\mathrm{h}_1}{d_1}\right) - \arctan\left(\frac{\mathrm{h}_1 - \mathrm{h}_s}{d_1}\right) \right]$$

$$A\big(\mathrm{h}_1, d_1, \mathrm{h}_2, d_2, V(h_s)\big) = A_{d_1}\big(\mathrm{h}_1, d_1, V(h_s)\big) + A_{d_2}\big(\mathrm{h}_2, d_2, V(h_s)\big)$$

Les détecteurs D1 et D2 sont disposés de préférence latéralement par rapport à la seringue, et de préférence encore selon un axe parallèle à l'axe de la seringue, mais décalé d'une certaine distance par rapport à celui-ci.

Le document US7608831 ne divulgue pas de disposer les deux détecteurs à scintillation axialement sur un côté de la seringue mais divulgue de disposer les détecteurs à scintillation axialement mais alignés sur un axe commun avec la seringue, les détecteurs étant placés à une distance de chaque extrémité de la seringue.

A l'inverse, la position des détecteurs D1 et D2 selon l'invention permet d'obtenir un angle solide de détection de la radioactivité qui est beaucoup plus important que dans le document US7608831, ce qui permet :

- d'une part obtenir une plus grande sensibilité de la mesure, en ce sens que celle-ci est dépendante de la distance entre le centre de la source et chaque détecteur et sachant qu'il est plus aisé de rapprocher des détecteurs en les positionnant latéralement plutôt que dans l'axe car il y a l'encombrement du poussoir d'un côté et des tubulures de l'autre qui éloignent inévitablement les détecteurs de la source, et
- d'autre part la possibilité de détecter la présence de bulles éventuelles dans la solution.

On notera que la détection d'air est possible pour des solutions mesurées qui sont homogènes (ce qui est le cas pour les solutions radiopharmaceutiques) et avec deux détecteurs d'activité fonctionnels. En fonctionnement normal (solution homogène et détecteurs fonctionnels), l'activimètre pourra identifier la présence d'air. Si la solution n'est pas homogène ou qu'un des deux détecteurs n'est plus fonctionnel, l'activimètre détectera un défaut, mais il sera incapable à lui seul de différentier ce défaut de la présence d'air.

Selon l'invention, les détecteurs seront positionnés par rapport à la seringue de sorte à obtenir, à la sortie de la chaîne de détection et de mesure, une mesure de l'activité dans la seringue 10 une fonction F(M1,M2), qui est détaillée ci-dessus (voir également figure 2), quel que soit son niveau de remplissage, où M1 et M2 sont les mesures respectives, en μV, des détecteurs 3 (D1) et 4 (D2). Qui plus est, la position des détecteurs 3, 4 est choisie d'une manière telle que la fonction F(M1,M2) soit quasiment ou simplement égale à M1+M2.

Ainsi, grâce à l'invention, on peut connaître l'activité d'une seringue remplie en principe sans bulle d'air quel que soit son niveau de remplissage, et in fine indépendamment de la connaissance du volume V de solution dans la seringue.

Le système selon l'invention inclut également un actionneur de seringue 14 qui permet de connaître à tout instant la position du poussoir 6 de la seringue 2. Toute présence significative d'air dans la seringue va constituer une anomalie de géométrie et sera ainsi détectable.

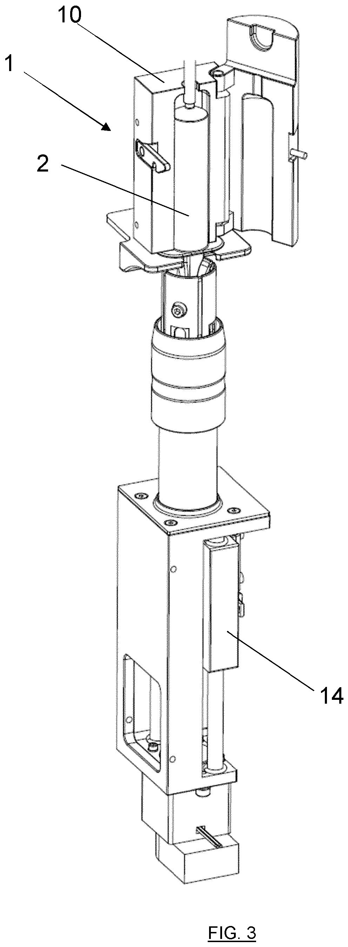

La figure 3 représente schématiquement la génération des signaux de rayonnement au niveau des détecteurs 3, 4, la conversion rayonnement/signal électrique de tension 11, le traitement/l'analyse des signaux 12 et enfin l'affichage 13 sur l'écran de la mesure d'activité et la détection de présence d'air éventuelle.

L'utilisation de la fonction F(M1,M2) pour déterminer l'activité de la solution n'est valable que pour autant que la seringue 2 ne contienne pas de bulle d'air. Par ailleurs, en l'absence de bulle d'air, le ratio M2/M1 - de même que M1/(M1+M2) et M2/(M1+M2) - évolue aussi selon une fonction R(V) où V est le volume correspondant à la position du poussoir 6. Ainsi, le système permet de s'assurer que le ratio M2/M1 correspond bien à ce qu'il devrait être pour la position correspondant au volume V prélevé. Le système selon l'invention permet donc à la fois le prélèvement d'une quantité précise d'activité et la détection de la présence d'une bulle d'air susceptible de fausser le résultat.

L'analyse des signaux M1 et M2 peut donc être corrélée en continu à la position du système de remplissage et veiller à la cohérence entre les trois valeurs M1, M2 et V.

On a supposé ci-dessus que les mesures M1 et M2 sont des valeurs parfaites non corrigées. En pratique, les signaux issus des deux détecteurs nécessitent les corrections suivantes :

- la sensibilité intrinsèque de chaque détecteur doit être prise en compte. Celle-ci sera ajustée dès la fabrication de l'appareil en sorte que les variations de sensibilité d'un exemplaire de détecteur à l'autre n'excèdent pas 1% ;

- un éventuel offset devra être soustrait du signal pour obtenir la mesure. L'offset a plusieurs sources, par exemple une faible activité résiduelle dans l'environnement ou un offset électronique dû aux composants. Une remise à zéro est prévue à chaque démarrage de l'appareil, lorsqu'aucune activité n'est présente à proximité, et en pratique, lors du remplacement de la seringue. La contribution électronique de l'offset est elle-même dépendante de la température. Un offset, en μV, trop important peut résulter d'un défaut. Une valeur maximale pour l'offset de chacun des détecteurs sera définie (sur base expérimentale). Tout dépassement entraînera un message d'erreur, par exemple "Offset on Detector (top/bottom) is to high, and exceeds xxx" ;

- la sensibilité est elle-même dépendante du niveau du signal et sera corrigée par application d'une correction linéaire dépendante de la température, commune à tous les détecteurs (d'un même modèle).

Enfin la mesure, en μV, résultant de la fonction F(M1,M2) devra finalement être convertie en MBq par l'application d'un facteur isotopique. L'utilisateur pourra aussi l'afficher en mCi le cas échéant, ceci n'étant cependant qu'un simple paramètre d'affichage.

De manière relativement similaire aux activimètres de type puits, une activité (source de référence 18) de longue durée de demi-vie est placée avantageusement de manière répétable et précise à un même endroit proche de l'activimètre, dans un compartiment dédié de l'appareil (tiroir 19 avec un logement blindé pour la source 18). Connaissant la décroissance de cette source, ainsi que son activité de départ, le système réalise une mesure périodique de cette activité de manière à permettre la détection d'une dérive éventuelle dans la mesure réalisée par l'activimètre.

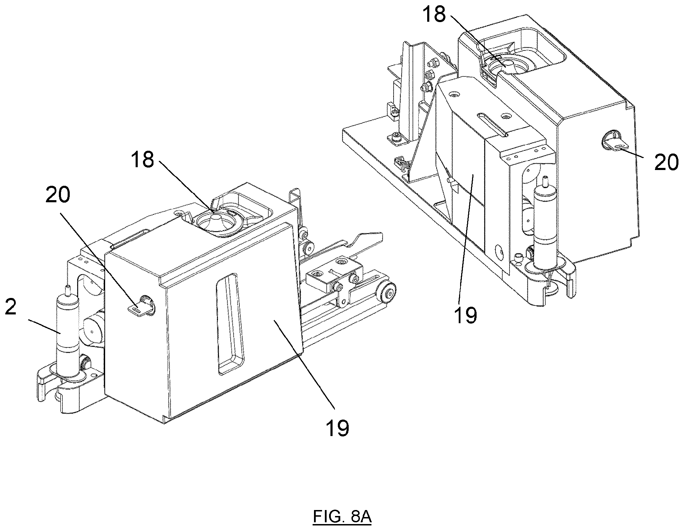

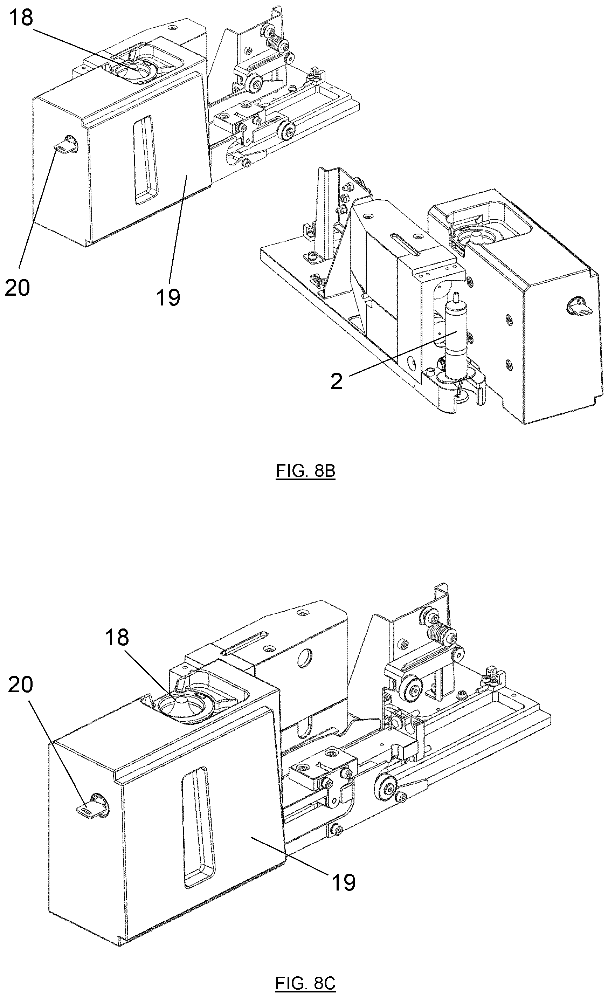

Les figures 8A à 8C montrent respectivement, selon une forme d'exécution de l'appareil, une première position dite de « rangement » pour la source de référence, sécurisée par une clef de verrouillage 20 du tiroir 19, une deuxième position dite de « mesure » de la source de référence pour les tests de reproductibilité, répétabilité, constance, calibration, etc. et enfin une troisième position dite de « placement » de la source de référence 18 dans le logement blindé du tiroir 19.

La calibration de l'activimètre pour chaque isotope est réalisée avantageusement en prélevant dans une seringue une dose bien précise de cet isotope spécifique. Cette dose est ensuite injectée par la seringue dans un flacon présent dans un activimètre de référence. L'activité mesurée par cette activimètre de référence est alors encodée dans le système pour redéfinir le bon facteur de transformation du signal, des μV en (M)Bq ou Ci.

## Exemples

### Example 1 : Linéarité de la somme M1+M2 (M1=A & M2=B)

Sur banc de tests équipé de l'actionneur de seringue, de l'activimètre et d'une seringue connectée à un ensemble de tubulures, l'actionneur de seringue a prélevé des volumes identiques de solution radioactive de manière successive dans la seringue en partant de 0ml jusqu'à 10ml. Après chaque incrément de prélèvement de volume, l'activimètre mesure une tension au niveau de ses 2 détecteurs.

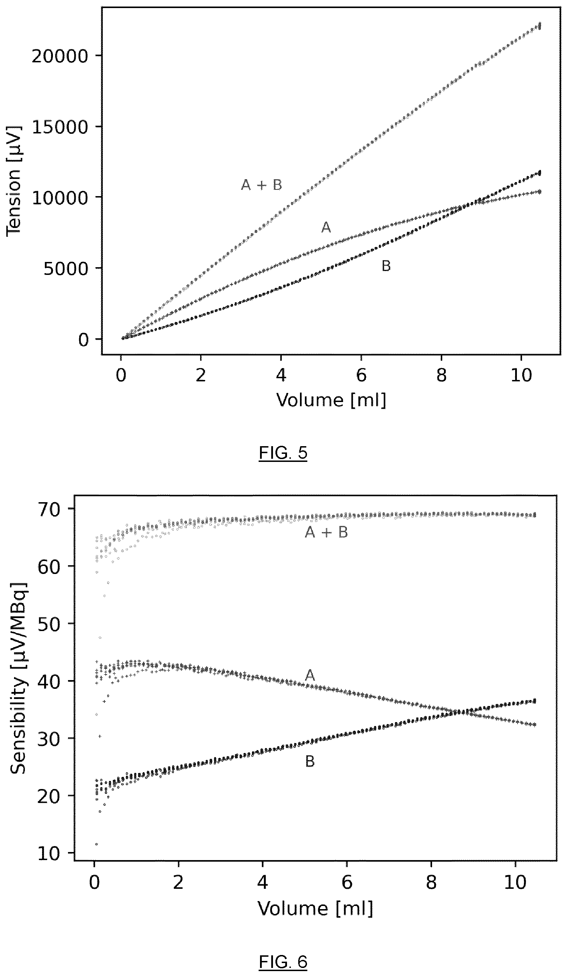

La figure 5 montre les signaux non-linéaires de chaque détecteur seul et la somme de ces signaux qui apparait approximativement linéaire.

La figure 6 montre l'évolution de la sensibilité en fonction du niveau de remplissage de la seringue. La sensibilité étant approximativement constante sur la plage de remplissage, cela permet de mieux mettre en évidence la linéarité de la somme des signaux.

### Exemple 2 : Détection d'air

Sur banc de tests équipé de l'actionneur de seringue, de l'activimètre et d'une seringue connectée à un ensemble de tubulures, l'actionneur de seringue a prélevé 2,5 ml de solution radioactive sans bulle d'air. L'activimètre a mesuré en continu la tension au niveau des deux détecteurs M1 et M2.

Ensuite, l'actionneur a continué à prélever non plus de la solution radioactive mais de l'air (5 x 0,5 ml) tout en mesurant les tensions M1 et M2 (au total : 5 ml).

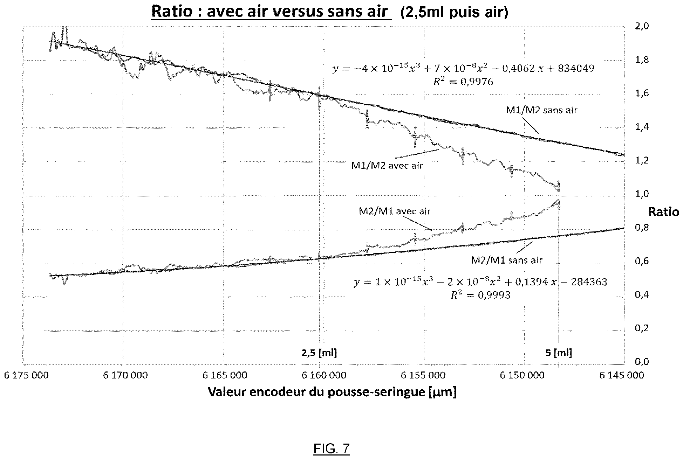

La figure 7 permet ainsi de comparer les 2 types de prélèvement via les ratios M2/M1 et M1/M2 : avec de l'air après 2ml de prélèvement de solution radioactive et sans aucun air.

On y voit en effet que les ratios décrochent juste après le prélèvement des 2,5 ml de saline (et l'arrivée de l'air) par rapport au ratio du prélèvement normal.

## Liste des symboles de référence

| 1 | activimètre |
|---|---|
| 2 | récipient, seringue |
| 3 | détecteur D1 |
| 4 | détecteur D2 |
| 6 | poussoir de seringue |
| 7 | piston de poussoir |
| 8 | bouton de poussoir |
| 10 | porte-échantillon |
| 11 | convertisseur rayonnement/signal électrique |
| 12 | moyens de traitement du signal |
| 13 | afficheur |
| 14 | actionneur de seringue |
| 15 | capteur de position du pousse-seringue |
| 16 | accouplement de seringue |
| 17 | capteur de température |
| 18 | source de référence |
| 19 | tiroir de la source de référence |
| 20 | clef de verrouillage du tiroir de la source de référence |

**Revendications**

1. Appareil (1) pour mesurer l'activité d'un échantillon de solution radioactive, dans un volume donné V, comprenant :

   - un conteneur portable blindé avec un porte-échantillon (10) ;
   - un récipient (2) ayant un axe longitudinal de symétrie et contenant la solution radioactive ;
   - au moins deux détecteurs de rayonnement (3, 4, ...), les détecteurs (3, 4, ...) étant disposés latéralement par rapport à l'axe longitudinal du récipient (2) ;
   - un dispositif de conversion (11) du rayonnement reçu par chaque détecteur (3, 4, ...) en un signal électrique M1, M2, ... correspondant ;
   - des moyens de traitement du signal électrique (12) et des moyens d'affichage (13) ;

   **caractérisé en ce que** les moyens de traitement du signal (12) sont configurés pour mettre au jour une corrélation donnée entre les signaux électriques respectifs M1, M2, ... représentatifs de ladite activité de l'échantillon et le volume V de l'échantillon, ce qui rend l'obtention de ladite activité indépendante du volume de l'échantillon.

2. Appareil selon la revendication 1, **caractérisé en ce que** les détecteurs (3, 4, ...) sont positionnés pour fournir une mesure d'activité qui soit une fonction F(M1, M2, ...) des signaux électriques respectifs M1, M2, ... obtenus à partir des détecteurs de rayonnement (3, 4, ...).

3. Appareil selon la revendication 2, **caractérisé en ce que** la fonction F(M1, M2, ...) est une simple addition des signaux électriques respectifs M1+M2+ ...

4. Appareil selon la revendication 1, **caractérisé en ce que** le récipient est une seringue (2) munie d'un poussoir (6) à piston (7).

5. Appareil selon la revendication 4, **caractérisé en ce qu'**il comporte un actionneur de seringue capable de connaître à tout instant la position du poussoir (6) de la seringue (2) et donc le volume de solution V dans la seringue.

6. Appareil selon la revendication 1, **caractérisé en ce que** la sensibilité et la position des détecteurs (3, 4, ...) sont choisies pour pouvoir mesurer une activité dans un intervalle compris entre 37kBq et 37GBq.

7. Appareil selon la revendication 1, **caractérisé en ce qu'**il comporte deux détecteurs (3, 4) disposés selon un axe parallèle à l'axe longitudinal du récipient mais distinct de celui-ci.

8. Appareil selon la revendication 2, **caractérisé en ce que** les moyens de traitement du signal électrique (12) et les moyens d'affichage (13) sont configurés pour convertir, respectivement afficher, la mesure électrique en $\mu$V résultant de F(M1, M2) en MBq ou Ci, par application d'un facteur isotopique.

9. Procédé de mise en oeuvre et contrôle de l'appareil selon la revendication 7, **caractérisé par** les étapes suivantes :

- on étalonne préalablement l'appareil au moyen de différents volumes d'une solution ne renfermant pas de bulle d'air et on associe un ratio, sélectionné parmi le groupe consistant en M2/M1, M2/(M1+M2) et M1/(M1+M2), à une fonction R(V), où V est le volume de la solution d'étalonnage ;
- en utilisation avec une solution d'activité inconnue de volume connu V, on mesure ledit ratio ;
- si le ratio mesuré s'écarte de plus d'un pourcentage prédéterminé, de préférence 10%, de la courbe de la fonction R(V), dépendant de la valeur du volume V, on affiche un message d'erreur indiquant une non-conformité associée à la présence de bulles d'air dans la solution.

10. Procédé de mise en oeuvre et contrôle de l'appareil selon la revendication 1, **caractérisé en ce que** les mesures M1, M2 sont corrigées de la manière suivante :

- on sélectionne lors de la construction de l'appareil des détecteurs dont la variation de sensibilité intrinsèque ne s'écarte pas de plus de 1% d'un détecteur à l'autre ;
- on soustrait l'offset du signal de chaque détecteur, le dépassement d'un offset maximal prédéterminé entraînant l'affichage d'un message d'erreur ;
- on corrige la sensibilité des détecteurs par application d'une correction linéaire dépendante de la température, cette fonction étant commune à tous les détecteurs d'un même modèle.

11. Utilisation de l'appareil selon l'une quelconque des revendications 1 à 8, pour la détection de présence de bulles dans la solution radioactive, sur base du contrôle d'une corrélation entre les signaux électriques respectifs M1, M2, ... et le volume V de l'échantillon.

FIG. 1

FIG. 2

FIG. 3

FIG. 4

FIG. 5

FIG. 6

**Ratio : avec air versus sans air** (2,5ml puis air)

$$y = -4 \times 10^{-15}x^3 + 7 \times 10^{-8}x^2 - 0,4062\,x + 834049$$
$$R^2 = 0,9976$$

M1/M2 sans air

M1/M2 avec air

M2/M1 avec air

Ratio

M2/M1 sans air

$$y = 1 \times 10^{-15}x^3 - 2 \times 10^{-8}x^2 + 0,1394\,x - 284363$$
$$R^2 = 0,9993$$

2,5 [ml]

5 [ml]

6 175 000   6 170 000   6 165 000   6 160 000   6 155 000   6 150 000   6 145 000

**Valeur encodeur du pousse-seringue [µm]**

FIG. 7

15

FIG. 8A

FIG. 8B

FIG. 8C

Europäisches
Patentamt

European
Patent Office

Office européen
des brevets

# RAPPORT DE RECHERCHE EUROPEENNE

**Numéro de la demande**

EP 24 21 4083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 3 499 149 A (CAVANAUGH ROBERT E JR) 3 mars 1970 (1970-03-03) | 1,6,8 | INV. G01T1/167 |
| A | * figures 1, 2, 7-12 *<br>* colonne 5, ligne 38 *<br>* colonne 11, lignes 48-49 *<br>* colonne 16, lignes 74-75 *<br>----- | 2-5,7, 9-11 | |
| X | EP 2 668 101 B1 (COMMISSARIAT L ENERGIE ATOMIQUE ET AUX ENERGIES ALTERNATIVES [FR]) 10 juin 2015 (2015-06-10) | 1,4,8 | |
| A | * alinéas [0024], [0035]; figures 2, 3 *<br><br>----- | 2,3,5-7, 9-11 | |
| X | GB 1 145 713 A (BECKMAN INSTRUMENTS INC) 19 mars 1969 (1969-03-19) | 1,8 | |
| A | * figures 1-4 *<br>* page 5, colonne 2, lignes 88-98 *<br>----- | 2-7,9-11 | |
| X | GB 1 413 267 A (BECKMAN INSTRUMENTS INC) 12 novembre 1975 (1975-11-12) | 1,2,8 | |
| A | * figures 1, 2, 5, 6 *<br>* page 4, colonne 2, lignes 83-129 *<br>----- | 3-7,9-11 | DOMAINES TECHNIQUES RECHERCHES (IPC)<br><br>G01T |
| X | EP 0 411 782 A2 (BECKMAN INSTRUMENTS INC [US]) 6 février 1991 (1991-02-06) | 1,8,11 | |
| A | * figures 1, 6 *<br>* colonne 3, ligne 57 - colonne 4, ligne 8 *<br>* colonne 4, lignes 30-35 *<br>----- | 2-7,9,10 | |

Le présent rapport a été établi pour toutes les revendications

2

| Lieu de la recherche | Date d'achèvement de la recherche | Examinateur |
|---|---|---|
| La Haye | 20 mars 2025 | Johnstone, John |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 4083

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2025

| Document brevet cité au rapport de recherche | | Date de publication | Membre(s) de la famille de brevet(s) | | Date de publication |
|---|---|---|---|---|---|
| US 3499149 | A | 03-03-1970 | CH | 464365 A | 31-10-1968 |
| | | | DE | 1614333 A1 | 02-03-1972 |
| | | | GB | 1185071 A | 18-03-1970 |
| | | | GB | 1185072 A | 18-03-1970 |
| | | | IL | 27779 A | 24-12-1970 |
| | | | NL | 6705092 A | 12-10-1967 |
| | | | SE | 336477 B | 05-07-1971 |
| | | | SE | 368870 B | 22-07-1974 |
| | | | US | 3499149 A | 03-03-1970 |
| EP 2668101 | B1 | 10-06-2015 | EP | 2668101 A1 | 04-12-2013 |
| | | | FR | 2970703 A1 | 27-07-2012 |
| | | | WO | 2012101074 A1 | 02-08-2012 |
| GB 1145713 | A | 19-03-1969 | DE | 1598121 A1 | 22-10-1970 |
| | | | GB | 1145713 A | 19-03-1969 |
| | | | US | 3381130 A | 30-04-1968 |
| GB 1413267 | A | 12-11-1975 | CA | 998781 A | 19-10-1976 |
| | | | DE | 2414535 A1 | 03-10-1974 |
| | | | GB | 1413267 A | 12-11-1975 |
| | | | NL | 7402635 A | 30-09-1974 |
| | | | US | 3859528 A | 07-01-1975 |
| EP 0411782 | A2 | 06-02-1991 | DE | 69025666 T2 | 18-07-1996 |
| | | | EP | 0411782 A2 | 06-02-1991 |
| | | | JP | 2609942 B2 | 14-05-1997 |
| | | | JP | H0371082 A | 26-03-1991 |
| | | | US | 5025161 A | 18-06-1991 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7608831 B2
- US 11029418 B2
- FR 3053124 B1
- US 7608831 B